# FASCICULE DE BREVET EUROPEEN

(11) **EP 2 174 366 B1**
(45) Date de publication et mention de la délivrance du brevet: **07.08.2019**
(21) Numéro de dépôt: 08717076.7
(22) Date de dépôt: 25.02.2008
(51) Int. Cl.: H01M 2/10, H01M 10/42, H01G 11/82, H01M 2/20

(54) **MODULE POUR ENSEMBLES DE STOCKAGE D'ENERGIE ELECTRIQUE PERMETTANT LA DETECTION DU VIEILLISSEMENT DESDITS ENSEMBLES**
MODUL FÜR ELEKTRISCHE ENERGIESPEICHERBAUGRUPPEN ZUR ALTERUNGSDETEKTION DER BAUGRUPPEN
MODULE FOR ELECTRIC ENERGY STORAGE ASSEMBLIES FOR AGEING DETECTION OF SAID ASSEMBLIES

(30) Priorité: 15.05.2007 FR 0755089
(43) Date de publication de la demande: 14.04.2010
(73) Titulaire: Blue Solutions, 29500 Ergué Gabéric (FR)
(72) Inventeur: CAUMONT, Olivier, 29000 Quimper (FR); JUVENTIN-MATHES, Anne-Claire, 29000 Quimper (FR); LE BRAS, Karine, 29820 Guilers (FR); DEPOND, Jean-Michel, 29000 Quimper (FR)
(74) Mandataire: Regimbeau
(86) Numéro de dépôt international: PCT/EP2008/052231
(87) Numéro de publication internationale: WO 2008/141845

(56) Documents cités:
- EP-A1- 1 780 825
- DE-A1- 19 958 411
- FR-A- 1 557 516
- FR-A- 2 888 669
- US-A1- 2005 031 945
- US-A1- 2007 009 791

## Description

La présente invention concerne le domaine technique général des ensembles de stockage d'énergie électrique.

Plus particulièrement l'invention concerne le domaine des modules comprenant au moins deux ensembles de stockage d'énergie électrique.

On entend, dans le cadre de la présente invention, par « ensemble de stockage d'énergie électrique », soit un condensateur (i.e. un système passif comprenant deux électrodes et un isolant), soit un supercondensateur (i.e. un système comprenant deux électrodes, un électrolyte et un séparateur), soit une batterie de type batterie au lithium (i.e. un système comprenant une anode, une cathode et une solution d'électrolyte entre l'anode et la cathode).

### PRESENTATION GENERALE DE L'ART ANTERIEUR

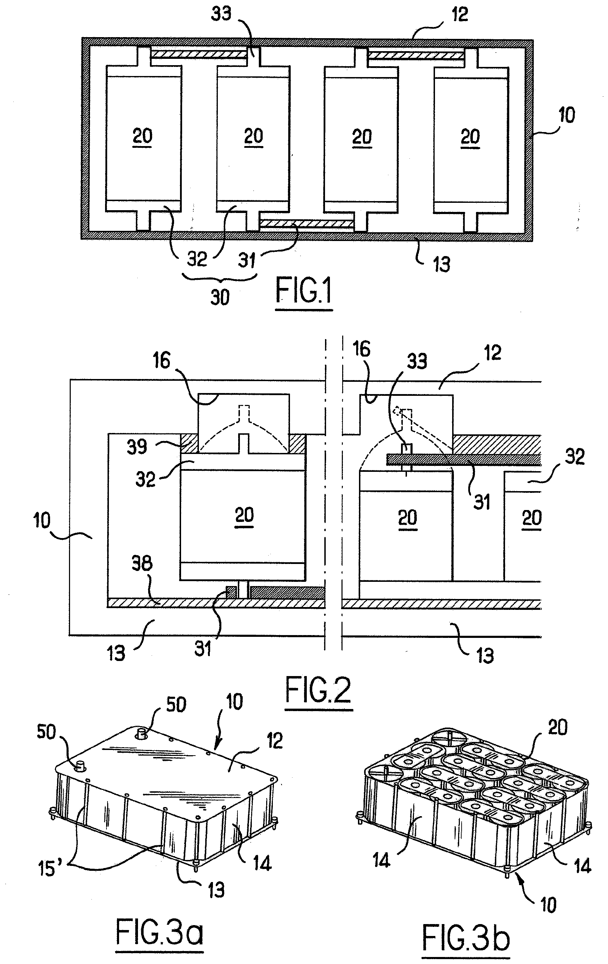

On connaît des modules tels que représentés à la figure 1, comprenant un boîtier 10 dans lequel sont disposés plusieurs ensembles de stockage d'énergie électrique 20 reliés par des moyens de connexion 30.

Comme illustré schématiquement à la figure 1, les moyens de connexion 30 permettant la connexion électrique de deux ensembles de stockage 20 adjacents comprennent deux couvercles 32 et une barrette 31.

Chaque couvercle 32 est destiné à coiffer un ensemble de stockage 20 respectif de sorte à être connecté électriquement à celui-ci. Chaque couvercle 32 comprend en outre une borne de connexion 33 apte à venir en contact avec un alésage traversant de la barrette 31, de sorte à relier électriquement deux ensembles de stockage 20 adjacents.

Lorsque le module comprend plus de deux ensembles de stockage 20, les ensembles de stockage 20 sont reliés deux à deux alternativement au niveau de leurs couvercles 32 supérieurs et inférieurs.

En fonctionnement, les ensembles de stockage 20 et les moyens de connexion 30 produisent de la chaleur. Pour permettre d'évacuer cette chaleur, les ensembles de stockage 20 sont connectés thermiquement au boîtier 10.

Dans cette optique, les ensembles de stockage 20 sont maintenus contre les parois supérieure et inférieure 12, 13, du boîtier 10 (par l'intermédiaire des couvercles 32).

Au cours de son vieillissement, un ensemble de stockage 20 monte en pression interne en raison de la production par l'ensemble de stockage de gaz que la nature étanche du boîtier empêche de libérer.

Cette montée en pression fait bomber le couvercle 32 associé à l'ensemble de stockage 20 ce qui provoque un arrachement de la connectique interne entre l'ensemble de stockage 20 et son couvercle 32.

L'arrachement de la connectique interne induit une augmentation de résistance de l'ensemble de stockage 20. La fin de vie de l'ensemble de stockage 20 est donc facilement détectable, en suivant l'évolution de la résistance de celui-ci.

Dans un module tel que décrit ci-dessus, le bombage des couvercles 32 est bloqué par les parois supérieure et inférieure 12, 13 du boîtier 10 qui exercent une pression sur les ensembles de stockage 20 (par l'intermédiaire des couvercles).

Ainsi, l'augmentation de la résistance des ensembles de stockage n'est pas possible, ce qui rend plus difficile la détection de fin de vie d'un ensemble de stockage, et ne prévient pas la montée en pression interne des ensembles de stockage 20.

Le document DE 19958411 décrit un module comprenant un boîtier à l'intérieur duquel est disposé un ensemble de stockage d'énergie électrique. Toutefois, ce dernier n'est absolument pas maintenu contre la paroi inférieure du boîtier mais en est, au contraire, écarté. De plus, les traversées de courant 26, 32 ou les entretoises 30 empêchent tout gonflement de l'enveloppe extérieure de l'ensemble de stockage d'énergie.

Le document US 2005/0031945 décrit un module comprenant un ensemble de stockage d'énergie monté sur des entretoises, à l'intérieur d'un boîtier. Ce module fait partie de l'arrière-plan technologique de l'invention.

Le but général de l'invention est de proposer un module permettant de pallier les inconvénients des modules décrits ci-dessus.

### PRESENTATION DE L'INVENTION

A cet effet on prévoit un module comprenant un boîtier dans lequel est disposé au moins un ensemble de stockage d'énergie électrique comprenant une première face en contact thermique tout en étant en isolation électrique avec au moins la paroi inférieure du boîtier, et une deuxième face opposée à la première face, la deuxième face étant coiffée par un couvercle connecté électriquement audit ensemble de stockage d'énergie, dans lequel le module comprend des moyens permettant le maintien de l'ensemble de stockage associé contre la paroi inférieure du boîtier d'une part, et autorisant un gonflement du couvercle coiffant la deuxième face d'autre part.

Ainsi, le module selon l'invention autorise un certain gonflement des couvercles associés aux ensembles de stockage et donc la détection, soit d'une éventuelle augmentation de la résistance interne d'un ensemble de stockage du module, synonyme de fin de vie de l'ensemble de stockage concerné, soit la mesure du gonflement par un capteur associé.

Ainsi par exemple, pour une référence donnée d'ensemble de stockage d'énergie, un gonflement de 1mm, ou 2 ou 3 mm sera représentatif de la probabilité de durée de vie restante dudit ensemble dans des conditions normales de fonctionnement. La connaissance de cette information permettra de gérer la maintenance préventive du module en fonction de la durée de vie probable restante de chacun de ses ensembles.

Des aspects préférés mais non limitatifs du module selon l'invention sont les suivants :
- les moyens permettant le maintien de l'ensemble de stockage peuvent être constitués par un matériau compressible, ledit matériau étant comprimé à une valeur nominale suffisamment inférieure à son taux de compression maximal pour autoriser le gonflement des ensembles de stockage d'énergie d'une épaisseur comprise entre celle correspondant à ladite valeur nominale du matériau et celle correspondant au taux de compression maximal dudit matériau :
   ainsi, la portion de paroi de boîtier située au droit de l'ensemble de stockage peut se déformer pour autoriser le gonflement du couvercle de l'ensemble de stockage ; ceci permet notamment d'améliorer le maintien des ensembles de stockage à l'intérieur du boîtier tout en autorisant un gonflement des couvercles et facilite l'assemblage du module ;
- les moyens permettant le maintien de l'ensemble de stockage comprennent au moins un évidement sur la face interne de la paroi supérieure du boîtier en regard du couvercle, l'évidement s'étendant au droit de l'ensemble de stockage et étant prévu de sorte qu'au moins une portion du bord de l'évidement est en contact thermique tout en étant en isolation électrique avec :
   ▪ l'ensemble de stockage, et/ou
   ▪ des moyens de connexion d'au moins deux ensembles de stockage :
      ceci permet d'assurer le contact thermique entre les bords de l'évidement et le couvercle et d'autoriser le gonflement du couvercle ;
- l'évidement est un trou borgne de section semblable à celle du couvercle, les dimensions du trou borgne étant inférieures à celle du couvercle de l'ensemble de stockage associé, ou
- l'évidement est un trou borgne de section circulaire, le diamètre du trou borgne étant inférieur à celui de l'ensemble de stockage associé :
   ceci permet d'assurer un contact thermique entre les bords du trou borgne et le couvercle ;
- les moyens de connexion entre deux ensembles de stockage adjacents comprennent les couvercles associés aux deux ensembles de stockage et reliés électriquement à une barrette, chaque couvercle étant destiné à être en contact électrique avec une extrémité de la barrette ;
- les moyens de connexion entre deux ensembles de stockage comprennent les couvercles associés aux deux ensembles de stockage et reliés électriquement à une barrette, chaque couvercle comprenant une borne de connexion destinée à être en contact électrique avec une extrémité de la barrette au niveau d'un alésage traversant de la barrette.
- l'alésage traversant la barrette possède une rugosité de surface élevée pour favoriser le contact électrique avec la borne de connexion ;
- les barrettes peuvent être en cuivre :
   ceci permet de diminuer la résistance ohmique des moyens de connexion et ainsi de minimiser les pertes par effet Joule et donc la chaleur produite par les moyens de connexion ;
- les barrettes peuvent être en aluminium :
   ceci permet d'améliorer la conduction thermique entre les ensembles de stockage et le boîtier et de diminuer la masse des moyens de connexion ;
- les barrettes peuvent comporter un étamage ou un nickelage à titre de protection de surface et/ou d'amélioration du contact électrique ;
- les moyens de connexion entre deux ensembles de stockage adjacents comprennent deux couvercles reliés électriquement par une barrette, chaque couvercle peut être soudé laser par transparence, brasés ou liés par brasage-diffusion ;
- le soudage de la barrette peut être effectué au travers de zones préférentielles amincies ;
- la surface de contact entre la barrette et un couvercle est préférentiellement supérieure ou égale à un quart de la surface du couvercle et encore plus préférentiellement supérieure ou égale à la moitié de la surface du couvercle ;
- l'évidement peut comprendre une couche de matériau élastomère au moins sur son bord en contact thermique afin d'assurer en plus l' isolation électrique avec :
   ∘ l'ensemble de stockage, et/ou
   ∘ les moyens de connexion des deux ensembles de stockage :
   ceci permet d'assurer le contact thermique entre les bords de l'évidement et le couvercle et d'autoriser le gonflement du couvercle ;
- deux ensembles de stockage adjacents peuvent être reliés électriquement par une pièce longitudinale dont les extrémités forment les couvercles, respectivement supérieurs ou inférieurs de chacun des ensembles de stockage adjacents de manière à connecter électriquement lesdits ensembles de stockage adjacents ;
   ceci permet de maximiser la surface de contact entre les ensembles de stockage d'énergie et les parois du boîtier pour favoriser la diffusion thermique vers le boîtier, tandis que l'utilisation de moyens de connexion réalisés en une seule pièce permet de diminuer la résistance interne des moyens de connexion (et donc la production de chaleur par effet Joule) ;
- chaque extrémité de la pièce longitudinale comprend des zones préférentielles amincies radiales ;
- les zones préférentielles amincies peuvent être perpendiculaires deux à deux et avoir un angle de 45° avec l'axe longitudinal de la pièce ;
- les zones préférentielles amincies peuvent être perpendiculaires deux à deux, au moins une zone de chaque extrémité s'étendant selon l'axe longitudinal de la pièce ;
- le module peut comprendre une couche d'élastomère entre la paroi inférieure et les ensembles de stockage :
   la couche en élastomère permet d'isoler électriquement et de relier thermiquement les ensembles de stockage à la paroi inférieure du boîtier ;
- les moyens permettant le maintien de l'ensemble de stockage associé contre la paroi inférieure du boîtier d'une part, et autorisant un gonflement du couvercle coiffant la deuxième face d'autre part, comprennent des zones de compressibilités différentes ;
- il peut exister des zones de compressibilité différentes au niveau de chaque couvercle d'ensemble de stockage d'énergie, la zone située en face de la partie centrale de chaque couvercle étant moins compressible que la zone située en face du pourtour de chaque couvercle ;
- il peut exister des zones de compressibilité différentes au niveau de chaque couvercle d'ensemble de stockage d'énergie, la zone située en face de la partie centrale de chaque couvercle étant moins compressible que la zone située en face du pourtour de chaque couvercle ;
- il peut exister des zones de compressibilité différentes en fonction de leur positionnement face à des couvercles subissant des températures différentes selon leur place dans le module ;
- le boîtier peut comprendre des ailettes sur au moins une face extérieure du boîtier :
   on appellera ici ailettes tout dispositif permettant d'augmenter la surface d'échange convectif d'une pièce. On considérera que des raidisseurs de parois, tout aussi bien que des lames de radiateurs, peuvent constituer des ailettes au sens du présent brevet ;
   ceci permet d'augmenter la surface de contact entre le boîtier et le milieu extérieur afin de favoriser les échanges thermiques avec l'extérieur et ainsi améliorer le refroidissement de l'intérieur du module ;
- les ailettes sont disposées sur la face externe d'au moins une paroi du boîtier en contact thermique avec les éléments de dissipation thermique liés aux ensembles de stockage :
   ceci permet d'améliorer le refroidissement des ensembles de stockage ;
- le boîtier peut être en aluminium, ou en matériau composite carboné :
   ceci permet d'améliorer la conduction thermique entre l'intérieur et l'extérieur du boîtier par rapport à des boîtiers en plastique ou en acier, à caractéristiques mécaniques équivalentes;
- au moins une paroi en contact thermique et en isolation électrique avec les ensembles de stockage (par exemple la paroi inférieure du boîtier) peut comprendre ou être associée à un socle dans lequel est disposé un dispositif de refroidissement :
   ceci permet d'améliorer le refroidissement des ensembles de stockage ;
- le dispositif de refroidissement peut comprendre un circuit de circulation d'un fluide de refroidissement :
   ceci permet d'augmenter les échanges thermiques entre l'intérieur et l'extérieur du module ;
- le module peut comprendre en outre une carte électronique de gestion pour la gestion d'énergie et le diagnostic des ensembles de stockage d'énergie ;
- la carte électronique de gestion peut être en contact thermique tout en étant en isolation électrique avec au moins une paroi latérale du boîtier :
   la mise en contact thermique et isolation électrique des ensembles de stockage avec une première paroi du boîtier, et de la carte électronique avec une deuxième paroi (différente de la première paroi) permet de favoriser l'évacuation vers l'extérieur, de la chaleur produite à l'intérieur du module par la (ou les) carte(s) électronique(s) de gestion, les moyens de connexion et les ensembles de stockage ;
- dans un mode de réalisation, la carte électronique est en contact avec la face interne de la paroi latérale du boîtier ; dans un autre mode de réalisation, la carte électronique est en contact avec la face externe de la paroi latérale du boîtier.
- la carte électronique de gestion peut comprendre une couche de résine époxy sur laquelle est collé un circuit imprimé en cuivre, la couche de résine époxy étant en contact avec la face interne de l'autre paroi du boîtier :
   la couche de résine époxy permet la mise en contact thermique tout en assurant l'isolation électrique du circuit imprimé en cuivre avec le boîtier ;
- la carte électronique de gestion peut comprendre une plaque en aluminium sur la couche de résine époxy, la plaque en aluminium étant en contact avec la face interne de la paroi latérale du boîtier :
   la plaque en aluminium permet de favoriser l'évacuation de la chaleur produite par le circuit imprimé en cuivre vers la paroi du boîtier ;
- le module comprend autant de cartes électroniques de gestion que le boîtier comporte de parois, chacune desdites cartes étant en contact avec une paroi latérale respective du boîtier :
   ceci permet d'améliorer le refroidissement des cartes électroniques, d'optimiser le volume du module et de contribuer à l'homogénéisation des températures au sein du module, les cartes électroniques jouant alors le rôle de tampon thermique en évitant de creuser l'écart de température des ensembles entre le coeur et la périphérie du module, vis à vis des modules de l'état de l'art, où des cartes disposées au centre, au dessus ou en dessous du module accentuaient l'écart de température ressenti par les ensembles de stockages centraux et les ensembles de stockage périphériques; cette disposition a une conséquence importante sur la durée de vie globale du module, elle-même fortement liée aux déséquilibres de température que peuvent subir les différents ensembles de stockage du module.
- deux parois peuvent être en contact thermique tout en étant en isolation électrique avec les ensembles de stockage d'énergie :
   ceci permet d'augmenter la surface d'échange thermique entre le boîtier et les ensembles de stockage et ainsi d'améliorer le refroidissement des ensembles de stockage ;
- les deux parois en contact thermique tout en étant en isolation électrique avec les ensembles de stockage d'énergie sont les parois supérieure et inférieure du boîtier ;
- les couvercles des ensembles de stockage peuvent être constitués d'une matière électriquement conductrice apte à subir des déformations, et formant barrière aux gaz générés dans les ensembles de stockage pendant leur fonctionnement.
- par exemple, les couvercles des ensembles de stockage peuvent être en aluminium, et préférentiellement à teneur en aluminium supérieure à 99,5 %;
- le module peut comporter des moyens de détection du gonflement du ou de chaque ensemble de stockage d'énergie, ces moyens de détection pouvant être constitués par un capteur de pression disposé à l'intérieur de l'enveloppe du module en vis à vis de chaque ensemble, ou par un capteur de déformation situé sur les couvercles ou sur les barrettes, ou encore par un simple interrupteur donnant une information de gonflement de l'ensemble de stockage d'énergie en cause.
- l'information délivrée par le moyen de détection du gonflement peut être traitée par la carte électronique (40) de gestion d'énergie et de diagnostic des ensembles de stockage d'énergie.
- Selon une variante, l'information délivrée par le moyen de détection du gonflement peut être transmise par un connecteur du module à un moyen électronique externe de gestion d'énergie et de diagnostic des ensembles de stockage d'énergie.

### PRESENTATION DES FIGURES

D'autres caractéristiques, buts et avantages de la présente invention ressortiront encore de la description qui suit, laquelle est purement illustrative et non limitative et doit être lue en regard des dessins annexés sur lesquels :
- la figure 1 illustre un mode de réalisation d'un module de l'art antérieur,
- la figure 2 illustre en parties gauche et droite, deux modes de réalisation d'un module selon l'invention,
- les figures 3a à 3d illustrent un mode de réalisation d'un module selon l'invention,
- la figure 4 illustre un autre mode de réalisation du module,
- la figure 5 illustre des ailettes d'un mode de réalisation du module,
- les figures 6 à 9 illustrent des exemples de moyens de connexion des ensembles de stockage d énergie entre eux à l'intérieur du module,
- les figures 10 et 11 illustrent des exemples de carte électronique de gestion du module.
- Les figures 12 et 13 montrent des variantes de matériau compressible comprenant, pour la figure 13, des zones de compressibilité différentes en regard de chaque couvercle d'ensemble de stockage ;
- La figure 14 montre une autre variante dans laquelle des zones de compressibilité différents sont réalisées au voisinage des parties les plus chaudes du module ;
- La figure 15 montre la combinaison possible des figures 13 et 14 ;
- La figure 16 montre un moyen de réaliser des compressibilités différentes selon les variantes des figures 13 à 15, avant fermeture de l'enveloppe du module en partie haute de la figure, et après fermeture en partie basse.

### DESCRIPTION DE L'INVENTION

On va maintenant décrire différents modes de réalisation du module selon l'invention en référence aux figures 2 à 16. Dans ces différentes figures, les éléments équivalents du module portent les mêmes références numériques.

Comme illustré à la figure 2, le module comprend un boîtier 10 dans lequel est disposé au moins un ensemble de stockage d'énergie électrique 20.

L'ensemble de stockage 20 comprend une première face en contact thermique tout en étant en isolation électrique avec la paroi inférieure 13 du boîtier 10.

L'ensemble de stockage 20 comprend également une deuxième face opposée à la première face. Cette deuxième face est coiffée par un couvercle 32 connecté électriquement à l'ensemble de stockage d'énergie.

Le couvercle 32 est un élément de moyens de connexion 30 permettant de relier deux ensembles de stockage 20 adjacents.

Avantageusement, le module comprend des moyens 16 permettant le maintien de l'ensemble de stockage 20 contre la paroi inférieure 13 du boîtier 10 d'une part, et autorisant un gonflement du couvercle 32 coiffant la deuxième face d'autre part.

Ainsi, le module selon l'invention autorise le gonflement du couvercle 32 coiffant la deuxième face de l'ensemble de stockage. Ceci permet la détection de fin de vie de l'ensemble de stockage concerné, soit au moyen de capteurs individuels sur chaque ensemble de stockage, connectés à des moyens de traitement de l'information, soit directement en mesurant une éventuelle augmentation de la résistance interne de l'ensemble de stockage d'énergie.

Les capteurs peuvent mesurer, soit la pression, sur la paroi qui le porte, liée au gonflement d'un ensemble, soit la déformation du couvercle ou d'une barrette de connexion, soit encore ne pas mesurer le gonflement mais indiquer simplement l'atteinte d'un niveau prédéterminé de gonflement au moyen d'un simple interrupteur. Dans tous les cas, l'information relevée est transmise pour être exploitée, soit à une carte de gestion d'énergie et de diagnostic du module, soit par un connecteur du module à un moyen électronique externe de gestion d'énergie et de diagnostic des ensembles de stockage d'énergie.

Dans le mode de réalisation illustré à la figure 2, les moyens permettant le maintien de l'ensemble 20 d'une part et le gonflement du couvercle 32 d'autre part comprennent un évidement 16 sur la face interne de la paroi supérieure 12 du boîtier 10 en regard du couvercle 32. L'évidement 16 s'étend au droit de l'ensemble de stockage 20. Cet évidement 16 peut être par exemple un gorge ou un trou borgne.

Si l'évidement est réalisé sous la forme d'un trou borgne, alors le contour est équivalent à celui de la forme des ensembles de stockage : ainsi, si les ensembles sont de forme cylindrique, le trou borgne le sera aussi. De même, si la forme des ensembles de stockage est globalement carrée, le trou borgne le sera également. Dans tous les cas, l'évidement est prévu de sorte que ses dimensions soient inférieures à celle du couvercle de l'ensemble de stockage associé, de sorte que ce dernier, malgré le gonflement dont il est l'objet, reste toujours en contact thermique avec la paroi supérieure du module par le biais du bord de l'évidement, tout en restant isolé électriquement de ce dernier.

De façon alternative aux évidements, le moyen permettant le maintien de l'ensemble de stockage associé contre la paroi inférieure du boîtier d'une part, et autorisant un gonflement du couvercle coiffant la deuxième face d'autre part sont constitués par un matériau compressible, ledit matériau étant comprimé à une valeur nominale suffisamment inférieure à son taux de compression maximal pour autoriser le gonflement des ensembles de stockage d'énergie d'une épaisseur comprise entre celle correspondant à ladite valeur nominale du matériau et celle correspondant au taux de compression maximal dudit matériau.

Ainsi, lors de la fermeture du module, le matériau est comprimé et maintient les ensembles de stockage en contact avec la paroi inférieure du module. Mais du fait que le taux de compression maximal du matériau n'est pas atteint, le couvercle de l'élément peut se gonfler d'une épaisseur correspondant à l'espace disponible jusqu'à l'atteinte par le matériau compressible de sont aux de compression maximal.

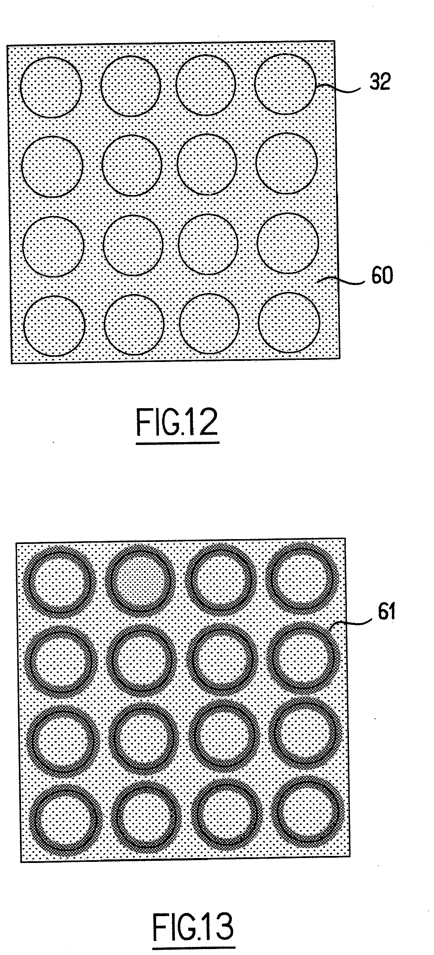

En référence aux figures 12 à 16, le matériau compressible 60peut comprendre divers types de mise en forme :
A la figure 12, ce matériau recouvre la totalité des ensembles de stockage de façon uniforme.

A la figure 13, le matériau comporte des zones 61 de compressibilité différentes en face de chaque couvercle, de sorte qu'il comprime plus le bord du couvercle que le centre : ceci a pour intérêt de laisser une marge de compression plus importante au centre tout en bloquant mécaniquement les bords, ce qui crée un « évidemment virtuel » par les seules propriétés du matériau utilisé.

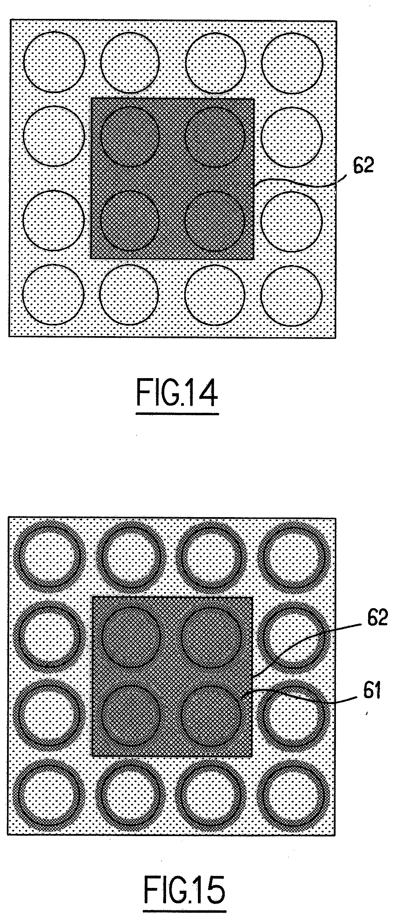

La figure 14 montre le cas où l'on a choisi d'utiliser un matériau dont la compression en zone centrale du module est supérieure à celle des bords du module, de façon à avoir un taux de compression sur les couvercles plus fort dans la zone centrale 62 plus contrainte thermiquement que sur les bords où les ensembles de stockage d'énergie sont mieux refroidis. Cette disposition particulière permet de mieux prendre en compte une durée de vie plus courte des ensembles de stockage situé au centre du module par rapport à celles des ensembles de stockage situés sur la périphérie du module, et d'équilibrer les informations individuelles des ensembles de stockage, prenant en compte leur disposition dans le module. En outre, une plus forte compression au centre permettra éventuellement de retarder le gonflement des ensembles de stockage plus fortement contraints thermiquement et de diminuer ainsi le déséquilibre de résistance interne dans le module.

La figure 15 allie les avantages décrits en regard des figures 13 et 14 en cumulant une plus forte compressibilité en zone centrale du module et une compressibilité différentielle encore accentuée au niveau des bords de chacun des couvercles d'ensemble de stockage situés dans la dite zone centrale.

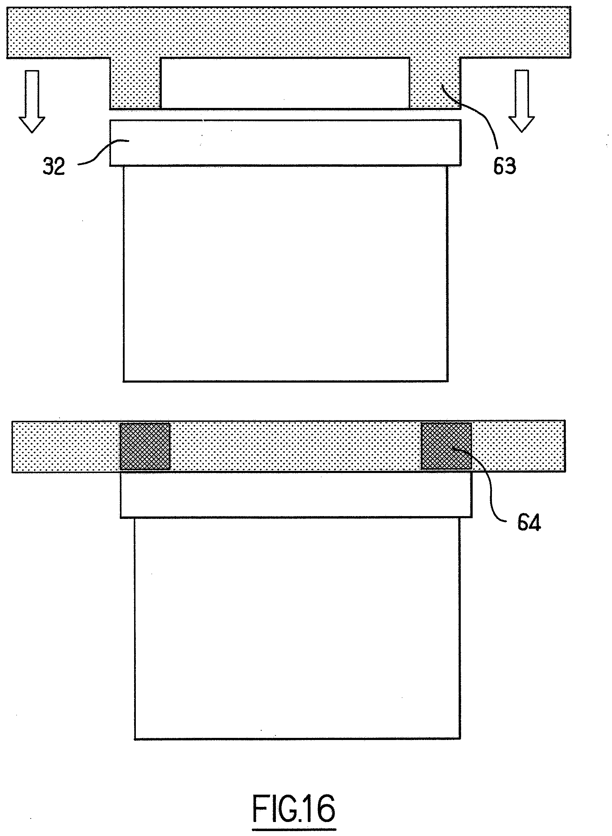

La façon d'obtenir une compressibilité différente dans une zone annulaire sur les bords des couvercles peut être réalisée ainsi qu'il est montré à la figure 16 :
Dans le haut de la figure montre le matériau compressible avant fermeture du module, on constate que le matériau comporte une zone annulaire épaissie 63, de sorte que, une fois comprimée, cette zone 64 (montrée sur la partie basse du dessin) possède par rapport au reste du matériau un taux de compression plus élevé.

Pour le choix de la nature du matériau des couvercles des ensembles de stockage il est préférable d'utiliser un matériau électriquement conducteur apte à subir des déformations, et formant barrière aux gaz générés dans les ensembles de stockage pendant leur fonctionnement. L'épaisseur des couvercle est également choisi de sorte à permettre un gonflement de ce dernier en fonction de la nature du matériau constituant ledit couvercle.

De façon préférentielle, le matériau choisi sera de l'aluminium et plus précisément un aluminium à teneur en aluminium supérieure à 99,5 %. Les propriétés mécaniques d'un alliage d'aluminium sont directement liées à sa pureté : moins il contient d'impuretés, plus il est facilement déformable.

Dans le cas où le module comprend une pluralité d'ensembles de stockage, un évidement 16 est associé à chaque ensemble de stockage 20.

Lorsque le dispositif comprend plusieurs ensembles de stockage 20, ceux-ci sont reliés électriquement deux à deux grâce à des moyens de connexion 30.

Dans un mode de réalisation, les moyens de connexion 30 permettant la liaison électrique entre deux ensembles de stockage 20 adjacents comprennent deux couvercles 32, associés respectivement aux deux ensembles de stockage 20, et une barrette 31.

Les dimensions de l'évidement son prévues de sorte qu'au moins une portion du bord de l'évidement 16 est en contact thermique tout en étant en isolation électrique avec les moyens de connexion 30.

La figure 2 illustre deux exemples différents de contact thermique entre les moyens de connexion 30 et l'évidement 16.

Dans un exemple (partie gauche du schéma), les bords de l'évidement 16 sont en contact thermique tout en étant en isolation électrique avec le couvercle 32.

Dans l'autre exemple (partie de droite du schéma), les bords de l'évidement 16 sont en contact thermique tout en étant en isolation électrique avec la barrette 31.

Dans ces deux exemples, une déformation du couvercle 32 (et de la barrette) est autorisée grâce à la présence de l'évidement 16.

Pour permettre le contact thermique tout en assurant l'isolation électrique, l'évidement comprend, dans certaines variantes, une couche de matériau élastomère au moins sur son bord en contact thermique tout en étant en isolation électrique avec les moyens de connexion 30.

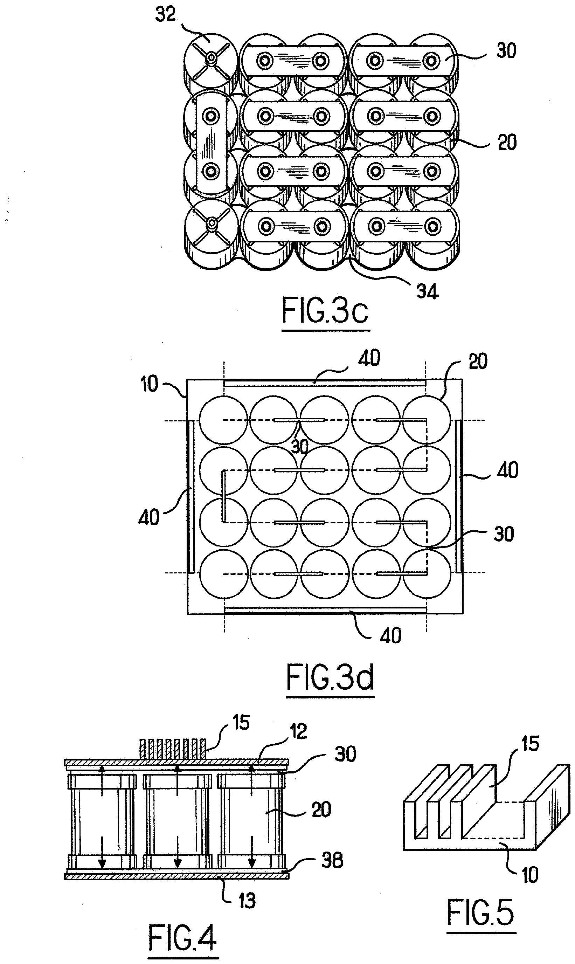

En référence à la figure 3a, on a illustré un mode de réalisation du module destiné à être connecté par des bornes de tension 50 à un dispositif annexe (non représenté).

Le module comprend un boîtier 10 dans lequel sont disposés des ensembles de stockage d'énergie électrique 20 reliés par des moyens de connexion 30.

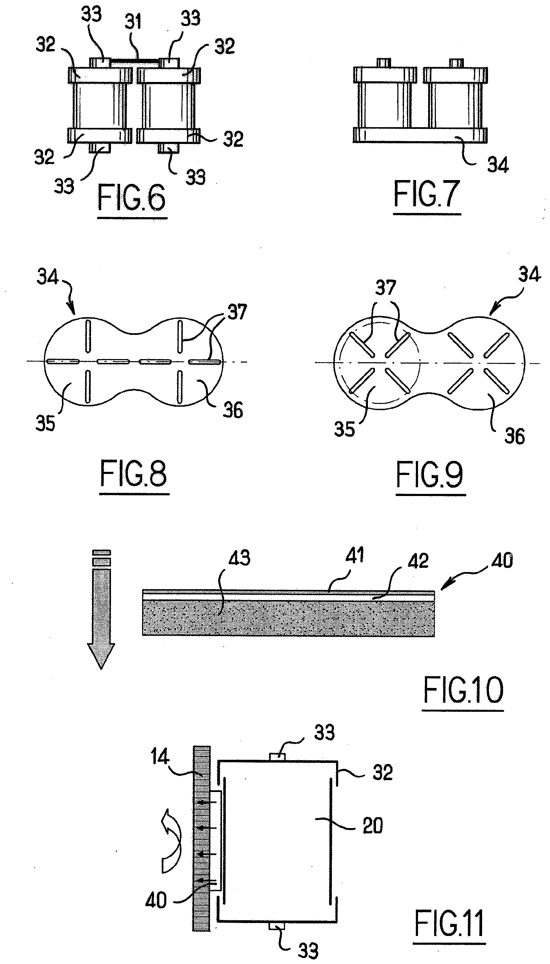

Le module comprend également une carte électronique de gestion 40 pour la gestion d'énergie et le diagnostic des ensembles de stockage d'énergie 20, la carte étant visible à la figure 11.

Les ensembles de stockage 20 sont de forme globalement cylindrique. Les ensembles de stockage 20 sont disposés côte à côte dans le boîtier 10. En d'autre terme, les axes de révolution des ensembles de stockage 20 sont parallèles. Dans d'autres variantes non représentées ici, les ensembles de stockage peuvent être de forme parallélépipédique, carrée, ovale, hexagonale, sans que cela change les principes généraux de l'invention.

Dans le mode de réalisation illustré aux figures 3a à 3d, les ensembles de stockage 20 sont disposés de sorte que leurs axes de révolution sont perpendiculaires aux parois supérieure 12 et inférieure 13 du boîtier 10.

Avantageusement, des parois différentes 12, 13, 14 du boîtier 10 sont en contact thermique tout en étant en isolation électrique respectivement :
- pour au moins une paroi avec des éléments de dissipation thermique liés aux ensembles de stockage d'énergie électrique,
- pour au moins une autre paroi avec la carte électronique de gestion.

Ceci permet de favoriser le refroidissement du module.

En effet, la connexion thermique des ensembles de stockage 20 avec une première paroi 12, 13 et de la carte électronique de gestion 40 avec une deuxième paroi 14 différente de la première paroi 12, 13 permet de maximiser la dissipation thermique de la chaleur émise par la carte 40 et les ensembles de stockage 20 vers l'extérieur du module.

Les éléments de dissipation thermique peuvent comprendre les moyens de connexion 30.

Les éléments de dissipation 38 (voir figures 2 et 4) peuvent également comprendre une couche en élastomère disposée entre les moyens de connexion 30 et la paroi du boîtier en contact thermique avec les ensembles de stockage 20.

La couche d'élastomère couvre plusieurs fonctions simultanément. Elle permet :
- l'isolation électrique des ensembles de stockage 20 vis à vis du boîtier 10 grâce à une tension de claquage supérieure à 1kV,
- l'absorption des dispersions géométriques des ensembles de stockage 20 dues aux tolérances de fabrication, grâce à son aptitude à la compression,
- l'amélioration des échanges thermiques entre les ensembles de stockage 20 et l'extérieur du module.

Dans un mode de réalisation avantageux, la paroi en contact avec les éléments de dissipation thermique est la paroi inférieure 13 du boîtier 10, et la paroi en contact avec la carte électronique de gestion 40 est une paroi latérale 14 du boîtier 10.

En effet, les ensembles de stockage 20 conduisent préférentiellement de la chaleur selon leur axe de révolution (axe longitudinal), de sorte qu'un refroidissement axial des ensembles de stockage 20 est plus efficace qu'un refroidissement radial de ceux-ci.

Selon le mode de réalisation, les ensembles de stockage 20 sont reliés thermiquement soit à la paroi supérieure 12, soit à la paroi inférieure 13, soit aux parois supérieure et inférieure 12, 13 du boîtier 10.

Dans le mode de réalisation illustré à la figure 4, les ensembles de stockage 20 sont reliés thermiquement aux parois supérieure et inférieure 12, 13. Des ailettes 15, 15' améliorent le refroidissement de l'ensemble.

La mise en contact thermique des ensembles de stockage avec deux parois permet d'améliorer le refroidissement des ensembles de stockage par une augmentation de la surface d'échange thermique entre les ensembles de stockage 20 et l'extérieur du module.

### Le boîtier

Le boîtier 10 permet la manutention du module, renforce l'isolation électrique et protège le coeur du module et son électronique des agressions potentielles extérieures.

Ce boîtier peut être parallélépipédique, pour être disposé à la place utilisée actuellement par une batterie de véhicule automobile, ou cylindrique, par exemple pour être logé dans l'espace libéré par une roue de secours, ou encore prismatique, définissant dans tous les cas des faces supérieure et inférieure, et des faces latérales.

Dans un mode de réalisation, les parois supérieure 12, inférieure 13 et latérales 14 du boîtier 10 sont en aluminium anodisé pour favoriser le refroidissement du module d'une part, via une meilleure dissipation radiative, et pour renforcer la tenue à la corrosion du module d'autre part.

Ainsi, l'utilisation de parois 12, 13, 14 en aluminium ou en matériau composite carboné permet d'améliorer la conduction thermique entre l'intérieur et l'extérieur du boîtier par rapport à des parois en matériau plastique ou en acier à caractéristiques mécaniques identiques. Ceci augmente l'efficacité du refroidissement des ensembles de stockage 20 et de la carte électronique 40.

Dans certaines variantes de réalisation de l'invention, le boîtier 10 comprend des ailettes 15 comme représenté aux figures 4 et 5.

Ces ailettes permettent d'augmenter la surface de contact entre le boîtier 10 et le milieu extérieur afin de favoriser les échanges thermiques avec l'extérieur. Ceci permet d'améliorer le refroidissement du module.

Les ailettes 15 peuvent être disposées sur au moins une face extérieure d'une paroi 12, 13, 14 du boîtier 10. Les raidisseurs 15' disposés sur les parois latérales constituent également des ailettes au sens du présent brevet puisqu'ils permettent d'augmenter la surface d'échange convectif des parois.

Par exemple, dans un mode de réalisation, les ailettes 15 sont disposées sur la face externe de la paroi du boîtier en contact thermique avec les ensembles de stockage 20 de sorte à améliorer le refroidissement desdits ensembles de stockage 20.

Dans le mode de réalisation illustré à la figure 4, les ailettes 15 sont disposées dans une région centrale de la face externe de la paroi supérieure 12 du boîtier 10.

Ceci permet de faciliter l'évacuation de la chaleur produite par les ensembles 20 situés au centre du boîtier 10 (i.e. les ensembles 20 les plus éloignés des parois latérales 14), et pour lesquels l'évacuation de la chaleur est plus difficile que pour les ensembles 20 situés à la périphérie du boîtier 10 (i.e. les ensembles 20 les plus proches des parois latérales 14).

Dans un autre mode de réalisation, les ailettes 15 sont disposées sur la face externe de la paroi du boîtier 10 en contact thermique avec la carte électronique de gestion 40 de sorte à améliorer le refroidissement de ladite carte électronique de gestion 40.

Avantageusement, dans un autre mode de réalisation, les faces externe des parois 12, 13, 14 en contact thermique avec les ensembles de stockage 20 d'une part et la (ou les) carte(s) électronique(s) 40 d'autre part comprennent des ailettes 15.

Dans le cas où plusieurs parois du boîtier sont en contact thermique avec les ensembles de stockage et/ou la (ou les) carte(s) électronique(s) de gestion, toutes ces parois en contact thermique, ou seulement certaines de ces parois peuvent comprendre des ailettes sur leur face externe.

Pour améliorer encore l'évacuation de la chaleur produite par les ensembles de stockage 20, dans une variante de réalisation de l'invention, la paroi en contact thermique avec les ensembles de stockage 20 comprend, ou est associé à, un socle (non représenté) dans lequel est disposé un dispositif de refroidissement (non représenté).

Le dispositif de refroidissement peut comprendre un circuit de circulation d'un fluide de refroidissement.

Dans le cas où plusieurs parois du boîtier sont en contact thermique avec les ensembles de stockage, le module peut comprendre un dispositif de refroidissement dans une seule ou dans toutes les parois en contact thermique avec les ensembles 20.

Ceci permet d'améliorer le refroidissement du module en bénéficiant d'un système externe de refroidissement, d'un véhicule utilisant le module par exemple, tel qu'un circuit de climatisation du véhicule.

### Ensemble de stockage d'énergie électrique

Dans le mode de réalisation illustré aux figures 3a à 3d, le module comprend vingt ensembles de stockage d'énergie électrique 20. Les ensembles de stockage sont de forme globalement cylindrique.

Les ensembles de stockage 20 sont disposés dans le boîtier 10, parallèlement les uns aux autres et parallèlement aux parois latérales du boîtier. En d'autre terme, les axes de révolution des ensembles de stockage 20 sont parallèles entre eux et parallèles à chaque plan dans lequel s'étend une paroi latérale respective.

Dans le mode de réalisation illustré aux figures 3a à 3d, les ensembles de stockage 20 sont disposés de sorte que leurs axes de révolution sont perpendiculaires aux parois supérieure 12 et inférieure 13 du boîtier 10.

Les ensembles de stockage 20 sont connectés deux à deux par les moyens de connexions 30 qui seront décrits en détail dans la suite de la description.

On notera que dans le mode de réalisation illustré aux figures 3a à 3d, les vingt ensembles de stockage d'énergie électrique 20 sont reliés en série.

Ces ensembles de stockage 20 sont reliés deux à deux alternativement au niveau de leurs couvercles supérieurs 32 et inférieurs 32. En d'autre terme, en se référant à un ensemble de stockage, celui-ci est relié par son couvercle supérieur à un premier ensemble de stockage adjacent, et par son couvercle inférieur à un deuxième ensemble de stockage adjacent différent du premier ensemble de stockage.

Bien évidemment, d'autres configurations que la configuration en série peuvent être adoptées en fonction de l'application. Par exemple, dans un module comprenant vingt ensembles de stockage 20, on peut relier en série une paire de dix ensembles de stockage 20 en série, et relier ensuite cette paire en parallèle, etc.

Les ensembles de stockages sont isolés électriquement des parois 12, 13, 14 du boîtier 10.

### Carte électronique de gestion

Dans le mode de réalisation illustré aux figures 3a à 3d, le dispositif comprend également quatre cartes électroniques de gestion 40.

La carte électronique de gestion 40 permet de gérer la charge et la décharge et le diagnostic des ensembles de stockage d'énergie 20. Par diagnostic, on entend ici l'ensemble des mesures de température, pression, tension et courant permettant de mesure et/ou de calculer l'état de charge ou l'état de santé du module au cours de sa vie active.

Notamment, la carte électronique permet de satisfaire deux besoins distincts :
- l'équilibrage des tensions de fin de charge des ensembles de stockage 20 du module,
- l'instrumentation en tension du module.

En effet, les ensembles de stockage 20 ont des caractéristiques (capacité, résistances) présentant des dispersions dues à la fabrication, et/ou au vieillissement, etc.

Ces différences font que lors de la charge du module, tous les ensembles de stockage 20 ne possèdent pas la même tension de charge.

L'équilibrage comprend donc l'homogénéisation de ces tensions autour d'une même valeur de tension définie en fonction de l'application visée.

La carte électronique de gestion est connectée en parallèle des ensembles de stockage associés en série.

La carte électronique de gestion 40 est isolée électriquement des parois du boîtier 10.

Une carte électronique de gestion 40 comprend une couche de résine époxy 42 sur laquelle est collée un circuit imprimé en cuivre 41.

La couche de résine époxy 42 permet la mise en contact thermique tout en assurant l'isolation électrique du circuit imprimé en cuivre 41 avec le boîtier 10.

La carte électronique de gestion 40 est disposée de sorte que la couche de résine époxy 42 vient en contact avec la face interne de la paroi 14 du boîtier 10.

Il sera entendu dans la suite que lorsqu'un élément A est mentionné comme étant « sur » un élément B, celui-ci peut être directement sur l'élément B, ou peut être située au dessus de l'élément B et séparé de l'élément B par un ou plusieurs autres éléments intermédiaires.

Il sera également entendu que lorsqu'un élément A est mentionné comme étant « sur » un élément B, celui-ci peut couvrir toute la surface de l'élément B, ou une portion de l'élément B.

Dans un mode de réalisation illustré à la figure 10, la carte électronique de gestion 40 comprend une plaque en aluminium 43 sur la couche de résine époxy 42 (de sorte que la couche de résine époxy est située entre le circuit imprimé en cuivre et la couche d'aluminium).

Dans ce cas, c'est la plaque en aluminium qui est mise en contact avec la face interne de la paroi 14 du boîtier 10.

Bien évidemment, les cartes électroniques 40 peuvent être disposées à l'extérieur du boîtier, et donc reliées thermiquement aux faces externes des parois latérales de ce dernier. Une telle disposition peut avoir pour intérêt d'améliorer encore le refroidissement des cartes, et d'en assurer plus facilement la maintenance, sans à avoir à ouvrir le boîtier, mais présente pour inconvénients de les exposer plus facilement aux chocs extérieurs, et de nécessiter une amélioration de l'étanchéité des parois du boîtier.

La présence, sur la carte électronique de gestion 40, d'une couche d'aluminium 43 favorise l'évacuation de la chaleur du circuit imprimé 41 en cuivre vers la paroi 14 du boîtier 10 en contact avec la carte électronique de gestion 40.

Avantageusement, le module peut comprendre autant de cartes électroniques de gestion 40 que le boîtier 10 comprend de parois latérales 14.

Dans le mode de réalisation illustré aux figures 3a à 3d, le module comprend quatre cartes électroniques de gestion 40 reliées thermiquement aux faces internes des quatre parois latérales 14 du boîtier 10.

La présence de quatre cartes électroniques sur les quatre parois latérales du module évite que les ensembles de stockage situés à la périphérie du boîtier ne se refroidissent plus vite que les ensembles de stockage 20 situés au centre du boîtier.

En effet, les cartes électroniques 40 jouent dans ce cas le rôle de tampon thermique. La présence de ces tampons thermiques sur les parois latérales induit que les ensembles de stockage 20 disposés à proximité des parois latérales 14 vont refroidir moins rapidement de sorte que tous les ensembles de stockage 20 du module vont refroidir à la même vitesse.

La chaleur étant la principale cause de vieillissement des ensembles de stockage 20, l'homogénéisation de la température à l'intérieur du module induit une homogénéisation du vieillissement des ensembles de stockage 20 du module.

Bien évidemment, le nombre de cartes électroniques sera optimisé en fonction du résultat thermique à obtenir, sans que le nombre de cartes doive obligatoirement être identique au nombre de parois latérales du boîtier, notamment quand le boîtier a une forme circulaire ou complexe liée à l'environnement particulier dans lequel le module est exploité.

### Moyens de connexion

Dans un mode de réalisation illustré à la figure 6, les moyens de connexion 30 entre deux ensembles de stockage 20 adjacents comprennent deux couvercles 32 reliés électriquement par une barrette 31.

Chaque couvercle 32 est destiné à coiffer un ensemble de stockage 20.

Chaque couvercle 32 comprend une borne de connexion 33 destinée à être en contact avec un alésage traversant (non représenté) de la barrette 31. Pour améliorer la conduction électrique entre la borne 33 et la barrette 31, l'état de surface de l'alésage traversant peut être rendu rugueux afin d'augmenter la surface de contact.

Dans un mode de réalisation, les barrettes 31 sont en cuivre. Ceci permet de diminuer la résistance ohmique des moyens de connexions 30 et donc de minimiser les pertes par effet Joule. Ainsi, la production de chaleur par les moyens de connexion 30 est réduite à l'intérieur du module.

Dans un autre mode de réalisation, les barrettes 31 sont en aluminium. Ceci permet d'améliorer la masse des moyens de connexion tout en conservant une résistance ohmique entre les ensembles de stockage et une conduction thermique satisfaisante entre les ensembles de stockage 20 et le boîtier 10.

Dans une variante, les barrettes 31 pourront être revêtues d'un traitement de surface de type nickelage ou étamage pour les protéger contre la corrosion, mais aussi pour améliorer le contact électrique

Pour chaque ensemble de stockage 20, le couvercle supérieur 32 de l'ensemble 20 est relié électriquement avec le couvercle supérieur 32 d'un ensemble adjacent, tandis que le couvercle inférieur 32' du même ensemble est relié électriquement avec le couvercle inférieur 32' d'un autre ensemble de stockage adjacent de sorte que chaque ensemble de stockage 20 peut être connecté à deux ensembles de stockage 20 adjacents, l'un au niveau de son couvercle supérieur et l'autre au niveau de son couvercle inférieur.

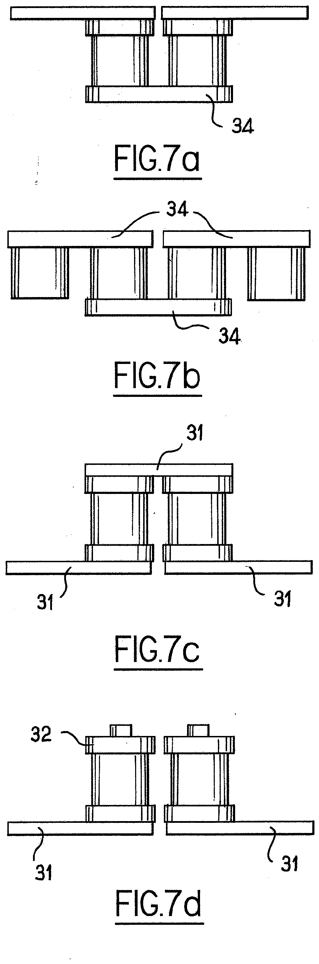

Dans le mode réalisation de la figure 7a, les ensembles de stockage d'énergie possèdent des couvercles plats sans borne de connexion. Ils sont alors soudés ou brasées par paires avec leurs voisins au moyen de barrettes soudées ou brasées dans le même arrangement que décrit au paragraphe précédent. Dans le cas de soudage laser par transparence, les barrettes pourront disposer de zones préférentielles amincies, similaires à celles décrites plus bas à propos du soudage des bi-couvercles.

La surface de contact entre la barrette 31 et un couvercle 32 est préférentiellement supérieure ou égale à un quart de la surface du couvercle 32, et encore plus préférentiellement supérieure ou égale à la moitié de la surface du couvercle 32, voire même sur la totalité de la surface du couvercle.

Cette configuration des ensembles de stockage permet de maximiser la surface de contact entre la barrette 31 et le couvercle et donc de favoriser les échanges thermiques entre le couvercle et le boîtier au travers de la barrette 31.

Dans un autre mode de réalisation illustré aux figures 7, 8 et 9, les moyens de connexion 30 comprennent une pièce longitudinale 34, appelée bi-couvercle, dont les extrémités 35, 36 forment les couvercles supérieurs ou les couvercles inférieurs de deux ensembles de stockage 20 adjacents pour les connecter électriquement.

L'utilisation de la pièce longitudinale 34 pour connecter électriquement deux ensembles de stockage adjacents permet d'accroître les performances électriques et thermiques des modules.

En effet, en ce qui concerne les performances électriques, l'utilisation des moyens de connexion réalisés en une seule pièce permet de diminuer la résistance interne des moyens de connexion (et donc la production de chaleur par effet Joule). En ce qui concerne les performances thermiques, l'utilisation de moyens de connexion en une seule pièce, aptes à former les couvercles supérieurs (ou inférieurs) de deux ensembles de stockage permet d'augmenter la surface de contact entre les ensembles de stockage 20 et les parois du module, ce qui favorise la diffusion thermique vers le boîtier 10.

Dans le cas où, les bi-couvercles sont soudés laser par transparence, chaque extrémité 35, 36 du bi-couvercle 34 comprend des zones préférentielles amincies 37 pour former des zones de soudage.

Dans les modes de réalisation illustrés aux figures 8 et 9, les zones préférentielles amincies 37 sont radiales et perpendiculaires deux à deux.

Dans le mode de réalisation illustré à la figure 8, une zone préférentielle amincie 37 de chaque extrémité 35, 36 s'étend selon l'axe longitudinal B-B de la pièce longitudinale 34.

Ceci permet de diminuer la résistance interne de la pièce longitudinale 34 (et donc la production de chaleur par effet Joule des moyens de connexion 30). Toutefois, dans ce cas, le courant circule principalement au niveau des zones amincies rectilignes s'étendant selon l'axe longitudinal B-B de la pièce longitudinale 34. Ceci peut provoquer un échauffement local de la pièce longitudinale au niveau des zones amincies rectilignes s'étendant selon l'axe longitudinal B-B de la pièce longitudinale 34.

Dans le mode de réalisation illustré à la figure 9, les zones amincies rectilignes radiales 37 sont perpendiculaires deux à deux et ont un angle de 45° avec l'axe longitudinal de la pièce. Ceci permet d'éviter les risques de détérioration liés à réchauffement local mentionné ci-dessus.

### Alternatives

Le lecteur aura compris que de nombreuses modifications peuvent être apportées au module décrit précédemment sans sortir matériellement des nouveaux enseignements et des avantages décrits ici.

Par conséquent, toutes les modifications de ce type sont destinées à être incorporées à l'intérieur de la portée du module tel que défini dans les revendications jointes.

Par exemple, le nombre d'ensemble de stockage du module peut être supérieur ou inférieur à 20. Par exemple, le module peut comprendre 2, ensembles de stockage d'énergie électrique, ou plus de 2 ensembles de stockage.

Par exemple, les ensembles de stockage d'énergie peuvent être reliés entre eux par des moyens combinés entre ceux décrits plus haut :
- bi-couvercles en bas, et couvercles à bornes en haut (figure 7) ;
- bi-couvercles en bas, et couvercles plats soudés ou brasés en haut (figure 7a),
- bi-couvercles en bas et en haut (figure 7b),
- barrettes soudées en haut et en bas (figure 7c),
- couvercles à bornes en haut et barrettes soudées en bas (figure 7d),
- couvercles à bornes en haut et en bas (figure 6),
et ceci en fonction contraintes d'assemblage et des besoins de fabrication.

Egalement, on peut imaginer des modes de réalisation dans lesquels les bords de l'évidement 16 sont en contact thermique tout en étant en isolation électrique avec l'ensemble de stockage 20. Par exemple dans le cas où le couvercle est serti à l'intérieur de l'ensemble. Dans ce cas, le couvercle 32 est solidarisé sur la face interne de la paroi latérale de l'ensemble de stockage 20, à proximité de son extrémité supérieure (de sorte que le couvercle 32 s'étend globalement en dessous du bord supérieur de l'ensemble de stockage 20). On peut aussi imaginer des modes de réalisation dans lesquels l'évidement est en contact thermique tout en étant en isolation électrique à la fois avec le couvercle 32 et l'ensemble de stockage 20.

Par ailleurs, le boîtier peut comporter, pour chaque ensemble de stockage plus d'un évidement. En particulier, pour chaque ensemble de stockage, le boîtier peut comporter deux évidements, l'un réalisé dans la face interne de la paroi supérieure et l'autre réalisé dans la face interne de la paroi inférieure.

De la même façon et sans sortir du cadre de l'invention, l'invention couvre également le cas où les évidements seraient situés en regard de la paroi inférieure, et donc où le gonflement des ensembles de stockage se ferait en partie basse du module.

De même, le nombre de cartes électroniques de gestion peut être supérieur ou inférieur à 4. Par exemple, le module peut comprendre une unique carte de gestion.

Dans ce cas, les deux ensembles de stockage sont reliés thermiquement à une première paroi et la carte électronique de gestion est reliée à une deuxième paroi - différente de la première paroi - de manière à augmenter les échanges thermiques avec l'extérieur, et ainsi favoriser l'évacuation de la chaleur produite par les ensembles de stockage, les moyens de connexion et la carte électronique de gestion.

Par ailleurs, dans les différents modes de réalisation décrits ci-dessus, on a présenté :
- les ensembles de stockage comme étant reliés thermiquement soit à la paroi inférieure du boîtier, soit à la paroi supérieure du boîtier, soit au parois supérieure et inférieure du boîtier, et
- la carte électronique de gestion comme étant reliée à une, deux, trois ou quatre des parois latérales du boîtier.

De la même façon, l'agencement géométrique des ensembles de stockage est décrit plus haut en réseau carré, mais peut être également de n'importe quelle forme, comme par exemple triangulaire, parallélogramme, hexagonale, octogonale, etc.

Avantageusement, le lecteur aura compris que les liaisons thermiques des ensembles de stockage et des cartes électroniques de gestion peuvent être inversées, à savoir que :
- les ensembles de stockage peuvent être reliés à une ou plusieurs parois latérales du boîtier, par exemple dans le cas où les ensembles de stockage d'énergie seraient agencés à plat de façon à respecter l'évacuation axiale de la chaleur des ensembles de stockage vers l'extérieur du boîtier,
- les cartes électroniques de gestion peuvent être reliées à la paroi supérieure, ou à la paroi inférieure, ou aux parois supérieure et inférieure.

Pour simplifier la description, nous avons décrit des modules s'étendant globalement verticalement. Bien entendu les modules pourraient avoir une orientation quelconque sans sortir du cadre de l'invention.

Egalement, dans la présente description, les ensembles de stockage et leur orientation a été définie par rapport à des ensembles de stockage comprenant une section circulaire. Bien évidemment, les ensembles de stockage pourraient avoir une section quelconque.

Enfin, les descriptions précédentes ont été proposées en liaison avec une construction de module comprenant un seul niveau d'ensemble de stockage, mais il est évident que l'invention peut également être appliquée à des modules comportant plusieurs couches d'ensembles de stockage, les échanges thermiques avec le boîtier s'appliquant aux couches externes de la pluralité d'ensembles de stockage.

## Revendications

1. Module comprenant un boîtier (10) dans lequel est disposé au moins un ensemble de stockage d'énergie électrique (20) comprenant une première face en contact thermique tout en étant en isolation électrique avec au moins la paroi inférieure (13) du boîtier, et une deuxième face opposée à la première face, la deuxième face étant coiffée par un couvercle (32) connecté électriquement audit ensemble de stockage d'énergie (20),
**caractérisé en ce que**
le module comprend des moyens permettant le maintien de l'ensemble de stockage (20) associé contre la paroi inférieure (13) du boîtier d'une part, et autorisant un gonflement du couvercle (32) coiffant la deuxième face d'autre part.

2. Module selon la revendication 1, **caractérisé en ce que** les moyens permettant le maintien de l'ensemble de stockage sont constitués par un matériau compressible (60), ledit matériau étant comprimé à une valeur nominale suffisamment inférieure à son taux de compression maximal pour autoriser le gonflement des ensembles de stockage d'énergie d'une épaisseur comprise entre celle correspondant à ladite valeur nominale du matériau et celle correspondant au taux de compression maximal dudit matériau.

3. Module selon la revendication 1, **caractérisé en ce que** lesdits moyens permettant le maintien de l'ensemble de stockage comprennent au moins un évidement (16) sur la face interne de la paroi supérieure (12) du boîtier (10) en regard du couvercle (32), l'évidement (16) s'étendant au droit de l'ensemble de stockage (20) et étant prévu de sorte qu'au moins une portion du bord de l'évidement (16) est en contact thermique tout en étant en isolation électrique avec :
- l'ensemble de stockage (20), et/ou
- des moyens de connexion d'au moins deux ensembles de stockage (20).

4. Module selon la revendication 3, **caractérisé en ce que** l'évidement (16) est un trou borgne de section semblable à celle du couvercle (32), les dimensions du trou borgne étant inférieures à celle du couvercle (32) de l'ensemble de stockage (20) associé.

5. Module selon la revendication 3 ou 4, **caractérisé en ce que** l'évidement (16) est un trou borgne de section circulaire, le diamètre du trou borgne étant inférieur à celui de l'ensemble de stockage associé (20).

6. Module selon l'une des revendications 3 à 5, **caractérisé en ce que** les moyens de connexion entre deux ensembles de stockage (20) adjacents comprennent les couvercles (32) associés aux deux ensembles de stockage et reliés électriquement à une barrette (31), chaque couvercle (32) étant destiné à être en contact électrique avec une extrémité de la barrette (31).

7. Module selon la revendication 6, **caractérisé en ce que** les barrettes (31) comportent un étamage ou un nickelage à titre de protection de surface et/ou d'amélioration du contact électrique.

8. Module selon l'une des revendications 3 à 7, **caractérisé en ce que** l'évidement (16) comprend une couche de matériau élastomère au moins sur son bord en contact thermique tout en étant en isolation électrique avec :
- l'ensemble de stockage (20), et/ou
- les moyens de connexion des deux ensembles de stockage.

9. Module selon l'une des revendications 3 à 8, **caractérisé en ce que** les moyens de connexion (30) entre deux ensembles de stockage (20) adjacents comprennent une pièce longitudinale (34) dont les extrémités (35, 36) forment les couvercles, respectivement supérieurs ou inférieurs de chacun des ensembles de stockage (20) adjacents de manière à connecter électriquement lesdits ensembles de stockage (20) adjacents.

10. Module selon la revendication 9, **caractérisé en ce que** chaque extrémité (35, 36) de la pièce longitudinale (34) comprend des zones préférentielles amincies radiales (37).

11. Module selon la revendication 10, **caractérisé en ce que** les zones préférentielles amincies (37) sont perpendiculaires deux à deux et ont un angle de 45° avec l'axe longitudinal (B-B) de la pièce (34).

12. Module selon la revendication 10, **caractérisé en ce que** les zones préférentielles amincies (37) sont perpendiculaires deux à deux, au moins une zone (37) de chaque extrémité (35, 36) s'étendant selon l'axe longitudinal (B-B) de la pièce (34).

13. Module selon l'une des revendications 1 à 12, **caractérisé en ce que** le module comprend une couche de matériau élastomère sur la face interne de la paroi inférieure (13) du boîtier (10).

14. Module selon l'une des revendications 1 à 13, **caractérisé en ce que** le boîtier (10) comprend des ailettes (15, 15') sur au moins une face extérieure du boîtier (10).

15. Module selon la revendication 14, **caractérisé en ce que** les ailettes (15) sont disposées sur la face externe de la paroi (12, 13) du boîtier (10) en contact thermique avec les ensembles de stockage (20).

16. Module selon l'une des revendications 1 à 15, **caractérisé en ce qu'**au moins une paroi (13) en contact thermique et en isolation électrique avec les ensembles de stockage (20) comprend ou est associée à un socle dans lequel est disposé un dispositif de refroidissement.

17. Module selon la revendication 16, **caractérisé en ce que** le dispositif de refroidissement comprend un circuit de circulation d'un fluide de refroidissement.

18. Module selon l'une des revendications 1 à 17, **caractérisé en ce qu'**il comprend en outre une carte électronique (40) pour la gestion d'énergie et le diagnostic des ensembles de stockage.

19. Module selon la revendication 18, **caractérisé en ce que** la carte électronique de gestion (40) est en contact thermique tout en étant en isolation électrique avec au moins une paroi latérale du boîtier (10).

20. Module selon l'une quelconque des revendications 1 à 19, **caractérisé en ce que** les couvercles (32) des ensembles sont constitués d'une matière électriquement conductrice apte à subir des déformations, et formant barrière aux gaz générés dans les ensembles pendant leur fonctionnement.

21. Module selon la revendication 20, **caractérisé en ce que** les couvercles (32) des ensembles sont en aluminium.

22. Module selon la revendication 21, **caractérisé en ce que** les couvercles (32) des ensembles sont en aluminium, à teneur en aluminium supérieure à 99,5 %.

23. Module selon l'une quelconque des revendications 1 à 22, **caractérisé en ce qu'**il comporte des moyens de détection du gonflement du ou de chaque ensemble de stockage d'énergie.

24. Module selon la revendication 23, **caractérisé en ce que** les moyens de détection du gonflement sont constitués par un capteur de pression disposé à l'intérieur de l'enveloppe du module en vis à vis de chaque ensemble.

25. Module selon la revendication 23, **caractérisé en ce que** les moyens de détection du gonflement sont constitués par un capteur de déformation situé sur les couvercles (32) ou sur les barrettes (31).

26. Module selon l'une des revendications 23, **caractérisé en ce que** les moyens de détection du gonflement sont constitués par un interrupteur donnant une information de gonflement de l'ensemble de stockage d'énergie en cause.

27. Module selon l'une quelconque des revendications 23 à 26, **caractérisé en ce que** l'information délivrée par les moyens de détection du gonflement est traitée par une ou plusieurs cartes électroniques (40) de gestion d'énergie et de diagnostic des ensembles de stockage d'énergie.

28. Module selon l'une quelconque des revendications 23 à 26, **caractérisé en ce que** l'information délivrée par les moyens de détection du gonflement est transmise par un connecteur du module à un moyen électronique externe de gestion d'énergie et de diagnostic des ensembles de stockage d'énergie.

29. Module selon l'une quelconque des revendications 1 à 28, **caractérisé en ce que** les moyens permettant le maintien de l'ensemble de stockage associé (20) contre la paroi inférieure (13) du boîtier (10) d'une part, et autorisant un gonflement du couvercle (32) coiffant la deuxième face d'autre part, comprennent des zones de compressibilités différentes.

30. Module selon la revendication 29, **caractérisé en ce que** il existe des zones de compressibilité différentes au niveau de chaque couvercle (32) d'ensemble de stockage d'énergie (20), la zone située en face de la partie centrale de chaque couvercle étant moins compressible que la zone située en face du pourtour de chaque couvercle.

31. Module selon l'une des revendications 29 ou 30, **caractérisé en ce qu'**il existe des zones de compressibilité différentes en fonction de leur positionnement face à des couvercles (32) subissant des températures différentes selon leur place dans le module.

## Patentansprüche

1. Modul, umfassend ein Gehäuse (10), in dem mindestens eine Baugruppe zum Speichern elektrischer Energie (20) angeordnet ist, umfassend eine erste Fläche in thermischem Kontakt bei gleichzeitiger elektrischer Isolation mit mindestens der unteren Wand (13) des Gehäuses, und eine zweite Fläche gegenüber der ersten Fläche, wobei die zweite Fläche von einem Deckel (32) bedeckt ist, der mit der Baugruppe zum Speichern von Energie (20) elektrisch verbunden ist,
**dadurch gekennzeichnet, dass**
das Modul Mittel umfasst, die das Halten der zugeordneten Speicherbaugruppe (20) gegen die untere Wand (13) des Gehäuses zum einen erlauben und ein Anschwellen des Deckels (32), der die zweite Fläche bedeckt, zum anderen gestatten.

2. Modul nach Anspruch 1, **dadurch gekennzeichnet, dass** die Mittel, welche das Halten der Speicherbaugruppe erlauben, aus einem komprimierbaren Material (60) bestehen, wobei das Material auf einen Nennwert komprimiert wird, der ausreichend unter seinem maximalen Kompressionsgrad liegt, um das Anschwellen der Baugruppen zum Speichern von Energie auf eine Stärke zu gestatten, die zwischen der liegt, die dem Nennwert des Materials entspricht, und der, die dem maximalen Kompressionsgrad des Materials entspricht.

3. Modul nach Anspruch 1, **dadurch gekennzeichnet, dass** die Mittel, welche das Halten der Speicherbaugruppe erlauben, mindestens eine Aussparung (16) auf der inneren Fläche der oberen Wand (12) des Gehäuses (10) gegenüber dem Deckel (32) umfassen, wobei sich die Aussparung (16) senkrecht zur Speicherbaugruppe (20) erstreckt und derart vorgesehen ist, dass mindestens ein Abschnitt des Randes der Aussparung (16) in thermischem Kontakt bei gleichzeitiger elektrischer Isolierung ist mit:
- der Speicherbaugruppe (20), und/oder
- Verbindungsmitteln von mindestens zwei Speicherbaugruppen (20).

4. Modul nach Anspruch 3, **dadurch gekennzeichnet, dass** die Aussparung (16) ein Sackloch mit einem Querschnitt ist, der dem des Deckels (32) ähnelt, wobei die Abmessungen des Sacklochs kleiner als die des Deckels (32) der zugeordneten Speicherbaugruppe (20) sind.

5. Modul nach Anspruch 3 oder 4, **dadurch gekennzeichnet, dass** die Aussparung (16) ein Sackloch mit kreisförmigem Querschnitt ist, wobei der Durchmesser des Sacklochs kleiner als der der zugeordneten Speicherbaugruppe (20) ist.

6. Modul nach einem der Ansprüche 3 bis 5, **dadurch gekennzeichnet, dass** die Verbindungsmittel zwischen zwei benachbarten Speicherbaugruppen (20) die den zwei Speicherbaugruppen zugeordnete Deckel (32) umfassen und elektrisch mit einer Leiste (31) verbunden sind, wobei jeder Deckel (32) bestimmt ist, in elektrischem Kontakt mit einem Ende der Leiste (31) zu sein.

7. Modul nach Anspruch 6, **dadurch gekennzeichnet, dass** die Leisten (31) eine Verzinnung oder eine Vernickelung als Oberflächenschutz und/oder Verbesserung des elektrischen Kontakts aufweisen.

8. Modul nach einem der Ansprüche 3 bis 7, **dadurch gekennzeichnet, dass** die Aussparung (16) eine Schicht aus Elastomermaterial mindestens auf ihrem Rand in thermischem Kontakt bei gleichzeitiger elektrischer Isolierung umfasst mit:
- der Speicherbaugruppe (20), und/oder
- den Verbindungsmitteln der zwei Speicherbaugruppen.

9. Modul nach einem der Ansprüche 3 bis 8, **dadurch gekennzeichnet, dass** die Verbindungsmittel (30) zwischen zwei benachbarten Speicherbaugruppen (20) ein längliches Teil (34) umfassen, dessen Enden (35, 36) die jeweils oberen oder unteren Deckel jeder der benachbarten Speicherbaugruppen (20) derart bilden, dass die benachbarten Speicherbaugruppen (20) elektrisch verbunden sind.

10. Modul nach Anspruch 9, **dadurch gekennzeichnet, dass** jedes Ende (35, 36) des länglichen Teils (34) radiale verschlankte bevorzugte Zonen (37) umfasst.

11. Modul nach Anspruch 10, **dadurch gekennzeichnet, dass** die verschlankten bevorzugten Zonen (37) paarweise senkrecht sind und einen Winkel von 45° mit der Längsachse (B-B) des Teils (34) haben.

12. Modul nach Anspruch 10, **dadurch gekennzeichnet, dass** die verschlankten bevorzugten Zonen (37) paarweise senkrecht sind, wobei sich mindestens eine Zone (37) jedes Endes (35, 36) in der Längsachse (B-B) des Teils (34) erstreckt.

13. Modul nach einem der Ansprüche 1 bis 12, **dadurch gekennzeichnet, dass** das Modul eine Schicht aus Elastomermaterial auf der inneren Fläche der unteren Wand (13) des Gehäuses (10) umfasst.

14. Modul nach einem der Ansprüche 1 bis 13, **dadurch gekennzeichnet, dass** das Gehäuse (10) Flügel (15, 15') auf mindestens einer äußeren Fläche des Gehäuses (10) umfasst.

15. Modul nach Anspruch 14, **dadurch gekennzeichnet, dass** die Flügel (15) auf der äußeren Fläche der Wand (12, 13) des Gehäuses (10) in thermischem Kontakt mit den Speicherbaugruppen (20) angeordnet sind.

16. Modul nach einem der Ansprüche 1 bis 15, **dadurch gekennzeichnet, dass** mindestens eine Wand (13) in thermischem Kontakt und in elektrischer Isolation mit den Speicherbaugruppen (20) einen Sockel umfasst oder diesem zugeordnet ist, in dem eine Kühlvorrichtung angeordnet ist.

17. Modul nach Anspruch 16, **dadurch gekennzeichnet, dass** die Kühlvorrichtung einen Zirkulationskreis eines Kühlfluids umfasst.

18. Modul nach einem der Ansprüche 1 bis 17, **dadurch gekennzeichnet, dass** es ferner eine elektronische Karte (40) für die Energieverwaltung und die Diagnose der Speicherbaugruppen umfasst.

19. Modul nach Anspruch 18, **dadurch gekennzeichnet, dass** die elektronische Verwaltungskarte (40) in thermischem Kontakt bei gleichzeitiger elektrischer Isolation mit mindestens einer seitlichen Wand des Gehäuses (10) ist.

20. Modul nach einem der Ansprüche 1 bis 19, **dadurch gekennzeichnet, dass** die Deckel (32) der Baugruppen aus einem elektrisch leitenden Material bestehen, das imstande ist, verformt zu werden, und eine Barriere für Gase bildet, die in den Baugruppen während ihres Betriebs entstehen.

21. Modul nach Anspruch 20, **dadurch gekennzeichnet, dass** die Deckel (32) der Baugruppen aus Aluminium sind.

22. Modul nach Anspruch 21, **dadurch gekennzeichnet, dass** die Deckel (32) der Baugruppen aus Aluminium mit einem Aluminiumgehalt von über 99,5 % sind.

23. Modul nach einem der Ansprüche 1 bis 22, **dadurch gekennzeichnet, dass** es Detektionsmittel des Anschwellens der oder jeder Baugruppe zum Speichern von Energie aufweist.

24. Modul nach Anspruch 23, **dadurch gekennzeichnet, dass** die Detektionsmittel des Anschwellens aus einem Drucksensor bestehen, der im Inneren der Hülle des Moduls gegenüber jeder Baugruppe angeordnet ist.

25. Modul nach Anspruch 23, **dadurch gekennzeichnet, dass** die Detektionsmittel des Anschwellens aus einem Verformungssensor bestehen, der sich auf den Deckeln (32) oder auf den Leisten (31) befindet.

26. Modul nach einem der Ansprüche 23, **dadurch gekennzeichnet, dass** die Detektionsmittel des Anschwellens aus einem Schalter bestehen, der eine Anschwellinformation der entsprechenden Baugruppe zum Speichern von Energie gibt.

27. Modul nach einem der Ansprüche 23 bis 26, **dadurch gekennzeichnet, dass** die von den Detektionsmitteln des Anschwellens bereitgestellte Information von einer oder mehreren elektronischen Karten (40) zur Energieverwaltung und Diagnose der Baugruppen zum Speichern von Energie verarbeitet wird.

28. Modul nach einem der Ansprüche 23 bis 26, **dadurch gekennzeichnet, dass** die von den Detektionsmitteln des Anschwellens bereitgestellte Information von einem Verbinder des Moduls an ein externes elektronisches Mittel zur Energieverwaltung und Diagnose der Baugruppen zum Speichern von Energie übertragen wird.

29. Modul nach einem der Ansprüche 1 bis 28, **dadurch gekennzeichnet, dass** die Mittel, welche das Halten der zugeordneten Speicherbaugruppe (20) gegen die untere Wand (13) des Gehäuses (10) zum einen erlauben und ein Anschwellen des Deckels (32), der die zweite Fläche bedeckt, zum anderen gestatten, Zonen mit unterschiedlichen Komprimierbarkeiten umfassen.

30. Modul nach Anspruch 29, **dadurch gekennzeichnet, dass** es Zonen mit unterschiedlichen Komprimierbarkeiten im Bereich jedes Deckels (32) einer Baugruppe zum Speichern von Energie (20) gibt, wobei die Zone, die sich gegenüber dem zentralen Teil jedes Deckels befindet, weniger komprimierbar ist als die Zone, die sich gegenüber dem Umfang jedes Deckels befindet.

31. Modul nach einem der Ansprüche 29 oder 30, **dadurch gekennzeichnet, dass** es Zonen mit unterschiedlichen Komprimierbarkeiten in Abhängigkeit von ihrer Positionierung gegenüber den Deckeln (32) gibt, die je nach ihrem Platz in dem Modul unterschiedlichen Temperaturen ausgesetzt sind.

## Claims

1. Module comprising a casing (10) in which at least one electric energy storage assembly (20) is arranged comprising a first face in thermal contact with whilst being electrically insulated from at least one lower wall (13) of the casing, and a second face opposite the first face, the second face being capped with a cover (32) electrically connected to said energy storage assembly (20),
**characterized in that**
the module comprises means to hold the associated storage assembly (20) against the lower wall (13) of the casing and which also allow swelling of the cover (32) capping the second face.

2. Module according to claim 1, **characterized in that** the means to hold the storage assembly in place comprise a compressible material (60), said material being compressed to a nominal value sufficiently lower than its maximum compression value to allow swelling of the energy storage assemblies by a thickness lying between the thickness corresponding to said nominal value of the material and that corresponding to the maximum compression value of said material.

3. Module according to claim 1, **characterized in that** said means to hold the storage assembly in place comprise at least one cut-out (16) on the inner face of the upper wall (12) of the casing (10) opposite the cover (32), the cut-out (16) extending over the storage assembly (20) and being designed so that at least one portion of the edge of the cut-out (16) is in thermal contact with whilst being electrically insulated from:
- the storage assembly (20) and/or
- the connection means of at least two storage assemblies (20).

4. Module according to claim 3, **characterized in that** the cut-out (16) is a blind hole of similar cross-section to the cover (32), the dimensions of the blind hole being smaller than those of the cover (32) of the associated storage assembly (20).

5. Module according to claim 3 or 4, **characterized in that** the cut-out (16) is a blind hole of circular cross-section, the diameter of the blind hole being smaller than that of the associated storage assembly (20).

6. Module according to any of claims 3 to 5, **characterized in that** the connection means between two adjacent storage assemblies (20) comprise the covers (32) associated with the two storage assemblies and electrically connected to a terminal strip (31), each cover (32) being intended to be in electrical contact with one end of the terminal strip (31).

7. Module according to claim 6, **characterized in that** the terminal strips (31) comprise tin or nickel plating as surface protection and/or improved electrical contact.

8. Module according to any of claims 3 to 7, **characterized in that** the cut-out (16) comprises a layer of elastomer material at least on its edge in thermal contact with, whilst being electrically insulated from:
- the storage assembly (20), and/or
- the connection means of the two storage assemblies

9. Module according to any of claims 3 to 8, **characterized in that** the connection means (30) between two adjacent storage assemblies (20) comprise a longitudinal part (34) whose ends (35, 36) form the respective upper or lower covers of each of the adjacent storage assemblies (20) so as electrically to connect said adjacent storage assemblies (20).

10. Module according to claim 9, **characterized in that** each end (35, 36) of the longitudinal part (34) comprises radial, preferential thinned regions (37).

11. Module according to claim 10, **characterized in that** the preferential thinned regions (37) lie perpendicular two by two and have an angle of 45° with the longitudinal axis (B-B) of the longitudinal part (34) .

12. Module according to claim 10, **characterized in that** the preferential thinned regions (37) lie perpendicular two by two, at least one region (37) of each end (35, 36) extending along the longitudinal axis (B-B) of the longitudinal part (34).

13. Module according to any of claims 1 to 12, **characterized in that** the module comprises a layer of elastomer material on the inner face of the lower wall (13) of the casing (10).

14. Module according to any of claims 1 to 13, **characterized in that** the casing (10) comprises fins (15, 15') on at least one outer face of the casing (10) .

15. Module according to claim 14, **characterized in that** the fins (15) are arranged on the outer face of the wall (12, 13) of the casing (10) in thermal contact with the storage assemblies (20).

16. Module according to any of claims 1 to 15, **characterized in that** at least one wall (13) in thermal contact with and electrically insulated from the storage assemblies (20) comprises or is associated with a base in which a cooling device is arranged.

17. Module according to claim 16, **characterized in that** the cooling device comprises a circulation circuit of cooling liquid.

18. Module according to any of claims 1 to 17, **characterized in that** it further comprises an electronic board (40) for energy management and diagnosis of the storage assemblies.

19. Module according to claim 18, **characterized in that** the electronic management board (40) is in thermal contact with whilst being electrically insulated from at least one side wall of the casing (10) .

20. Module according to any of claims 1 to 19, **characterized in that** the covers (32) of the assemblies consist of an electrically conductive material able to undergo deformations, and forming a barrier against the gases generated in the assemblies during their operation.

21. Module according to claim 20, **characterized in that** the covers (32) of the assemblies are in aluminium.

22. Module according to claim 21, **characterized in that** the covers (32) of the assemblies are in aluminium, whose aluminium content is more than 99.5%.

23. Module according to any of claims 1 to 22, **characterized in that** it comprises means to detect swelling of the or of each energy storage assembly.

24. Module according to claim 23, **characterized in that** the swelling detection means consist of a pressure sensor arranged inside the shell of the module facing each assembly.

25. Module according to claim 23, **characterized in that** the swelling detection means consist of a deformation sensor located on the covers (32) or on the terminal strips (31).

26. Module according to claim 23, **characterized in that** the swelling detection means consist of a switch giving data on swelling of the energy storage assembly under consideration.

27. Module according to any of claims 23 to 26, **characterized in that** the data delivered by the swelling detection means is processed by one or more electronic boards (40) for energy management and diagnosis of the energy storage assemblies.

28. Module according to any of claims 23 to 26, **characterized in that** the data delivered by the swelling detection mans is transmitted by a connector of the module to external electronic means for energy management and diagnosis of the energy storage assemblies.

29. Module according to any of claims 1 to 28, **characterized in that** the means to hold the associated storage assembly (20) against the lower wall (13) of the casing (10) and which also allow swelling of the cover (32) capping the second face, comprise regions of different compressibility.

30. Module according to claim 29, **characterized in that** there are regions of different compressibility at each cover (32) of an energy storage assembly (20), the region facing the central part of each cover being less compressible than the region facing the circumference of each cover.

31. Module according to either of claims 29 or 30, **characterized in that** there are regions of different compressibility in relation to their position facing covers (32) which undergo different temperatures depending on their location in the module.
